# EUROPÄISCHE PATENTANMELDUNG

(11) **EP 1 127 776 A2**
(43) Veröffentlichungstag der Anmeldung: **29.08.2001**
(21) Anmeldenummer: 01102765.3
(22) Anmeldetag: 08.02.2001
(51) Int. Cl.: B62D 25/06

(54) **Anordnung eines tragenden Bauteils einer Fahrzeugkarosserie**

(30) Priorität: 26.02.2000 DE 10009126
(71) Anmelder: Volkswagen Aktiengesellschaft, 38436 Wolfsburg (DE)
(72) Erfinder: Morsch, Klaus-Dieter, Dipl.-Ing., 38124 Braunschweig (DE)

(57) **Zusammenfassung**

Die vorliegende Erfindung betrifft eine Anordnung eines tragenden Bauteils einer Fahrzeugkarosserie umfassend wenigstens ein erstes Blechteil (1) und wenigstens ein mit diesem ersten Blechteil (1) zu verbindendes zweites Blechteil (2), wobei beide Blechteile (1, 2) angeformte Flansche (10, 20) aufweisen und die sich überlappenden Flansche (10, 20) beider Blechteile (1, 2) im Überlappungsbereich zur Bildung eines tragenden Bauteils miteinander verschweißbar sind. Erfindungsgemäß ist vorgesehen, daß die Flansche (10) wenigstens eines der Blechteile (1) durch Ausstanzen (Lochen) von Bereichen wenigstens einer Fläche (11, 12) dieses Blechteils (1) und Abstellen des Flansches (10) in eine von der Fläche (11, 12) verschiedene Ebene gebildet sind. Die erfindungsgemäße Anordnung erlaubt ein fertigungstechnisch besonders einfaches Verbinden von Blechteilen zu tragenden Bauteilen einer Fahrzeugkarosserie, wie beispielsweise Dachholmen oder sonstigen Trägern der Fahrzeugkarosserie durch Punktverschweißen im Überlappungsbereich der Flansche.

## Beschreibung

Die vorliegende Erfindung betrifft eine Anordnung eines tragenden Bauteils einer Fahrzeugkarosserie umfassend wenigstens ein erstes Blechteil und wenigstens ein mit diesem ersten Blechteil zu verbindendes zweites Blechteil, wobei beide Blechteile angeformte Flansche aufweisen und die sich überlappenden Flansche beider Blechteile im Überlappungsbereich zur Bildung eines tragenden Bauteils miteinander verschweißbar sind.

Eine Anordnung eines tragenden Bauteils einer Fahrzeugkarosserie der vorgenannten Art ist beispielsweise aus der DE 195 23 005 A1 bekannt. Bei der bekannten Anordnung wird ein erstes Blechteil, welches ein Dachteil einer Fahrzeugkarosserie ist mit einem zweiten Blechteil, welches ein Seitenwandteil einer Fahrzeugkarosserie ist verbunden durch Laserschweißen. Beide Blechteile weisen jeweils Flansche auf bzw. sich überlappende Bereiche und dort wird die Schweißverbindung hergestellt.

Eine ähnliche Anordnung eines tragenden Bauteils einer Fahrzeugkarosserie ist in der DE 197 23 301 A1 beschrieben. Dort sind Seitenwandblechteile so geformt, daß sie einen Längsträger für eine Fahrzeugkarosserie bilden. Die Blechteile weisen Flansche auf und werden dort zusammengeheftet. Außerdem erfolgt im Bereich eines der Flansche eine Verbindung mit einem dort aufliegenden Dachblech durch Punktschweißen. Eines der Blechteile bildet eine Innenwand eines Längsträgers und ein weiteres Blechteil bildet die Außenwand dieses Längsträgers, so daß beide miteinander verbundenen Blechteile einen Hohlraum umschließen und ein tragendes Bauteil der Karosserie bilden.

Die Aufgabe der vorliegenden Erfindung besteht darin, eine Anordnung eines tragenden Bauteils einer Fahrzeugkarosserie der eingangs genannten Art zu schaffen, die fertigungstechnische Vorteile aufweist.

Die Lösung dieser Aufgabe liefert eine erfindungsgemäße Anordnung eines tragenden Bauteils einer Fahrzeugkarosserie der eingangs genannten Gattung mit den kennzeichnenden Merkmalen des Hauptanspruchs. Erfindungsgemäß ist vorgesehen, daß die Flansche wenigstens eines der Blechteile durch Ausstanzen (Lochen) von Bereichen wenigstens einer Fläche dieses Blechteils und Abstellen des Flansches in eine von der Fläche verschiedene Ebene gebildet sind.

Anders als bei dem zuvor genannten Stand der Technik weist also erfindungsgemäß wenigstens eines der miteinander zu verbindenden Blechteile im Verbindungsbereich keinen sich über die Länge erstreckenden durchgehenden Flansch auf. Der Flansch dieses Blechteils wird vielmehr im Fertigungsprozeß dadurch gebildet, daß eine Fläche dieses Blechteils bereichsweise gelocht wird z.B. mittels eines geeigneten Stanzwerkzeuges. Dieser ausgestanzte Abschnitt der Fläche wird jedoch nicht von dem Blechteil abgetrennt wie bei einem vollständigen Ausstanzen, sondern das Blech wird im Bereich der Ausstanzung in eine von der Fläche des Blechteils verschiedene Ebene abgestellt, das heißt gebogen. Dadurch wird an dieser Stelle ein Flansch aus dem Material des Blechteils gebildet, der entlang einer Begrenzungskante mit dem Blechteil verbunden ist. Der Flansch wird vorzugsweise so abgestellt (gebogen), daß er in etwa im rechten Winkel zu der Fläche des Blechteils, aus der er ausgestanzt wurde, ausgerichtet ist.

In der Regel wird nicht nur ein solcher Flansch aus einer Fläche des Blechteils ausgestanzt und abgestellt, sondern vorzugsweise mehrere mit Abstand hintereinanderliegende parallele Flansche.

Da das erste Blechteil mehrere Flächen aufweisen kann, bei denen eine Verbindung mit Flächen eines zweiten Blechteils erfolgt, ist vorzugsweise gemäß einer Weiterbildung der Erfindung vorgesehen, daß bei wenigstens einem Blechteil aus allen für die Verbindung vorgesehenen Flächen derartige Flansche ausgestanzt und abgestellt werden. Dabei können die ursprünglichen Ebenen dieser mehreren Flächen eines Blechteils im Winkel zueinander ausgerichtet sein und die Flansche, die aus diesen Ebenen ausgestanzt werden, können wiederum in unterschiedliche Richtungen und in unterschiedlichen Winkeln jeweils zu den Flächen, aus denen sie ausgestanzt werden, abgestellt werden. Beispielsweise können Flansche einer ersten Fläche, wenn es sich um ein Blechteil handelt, welches zur Bildung eines Trägers vorgesehen ist und vergleichsweise langgestreckt ist, bezogen auf eine erste Fläche dieses Blechteils im Uhrzeigersinn gebogen und abgestellt werden und Flansche einer weiteren Fläche dieses Blechteils können im Gegenuhrzeigersinn gebogen und abgestellt werden.

Tragende Bauteile im Sinne der Erfindung eignen sich vorzugsweise als Träger oder Holme von Fahrzeugkarosserien beispielsweise als Dachholme, Längsträger, Seitenträger, Tragsäulen oder dergleichen.

Wenn das erste Blechteil bzw. zwei oder mehrere Blechteile der erfindungsgemäßen Anordnung so geformt sind, daß deren Flächen einen mehr oder weniger geschlossenen Hohlraum bilden, wie dies bei Trägern der Fahrzeugkarosserie häufig der Fall ist, dann können die Flansche bezogen auf den Hohlraum jeweils nach außen gebogen bzw. abgestellt werden. Derartige Außenflansche erleichtern die Verbindung der Blechteile untereinander bzw. mit weiteren an diesen zu befestigenden Bauteilen. Solche Außenflansche sind fertigungstechnisch besonders vorteilhaft, wenn eine Verbindung durch Punktschweißen vorgesehen ist, so daß eine rasche und rationelle Fertigung möglich ist.

Die miteinander zu verbindenden Blechteile im Rahmen einer erfindungsgemäßen Anordnung eines tragenden Bauteils einer Fahrzeugkarosserie können beispielsweise Hydroformteile sein. Diese Blechteile können durch Hydroforming geformt werden und in einem anschließenden Fertigungsschritt kann das Lochen der genannten Flächen des oder der Blechteile zur Bildung der Flansche beispielsweise durch Stanzwerkzeuge erfolgen, die in Form von Schiebern ausgebildet sind.

Die vorliegende Erfindung betrifft weiterhin ein Verfahren zur Herstellung eines tragenden Bauteils einer Fahrzeugkarosserie, welches wenigstens ein erstes Blechteil umfaßt und wenigstens ein mit diesem ersten Blechteil zu verbindendes zweites Blechteil, wobei beide Blechteile angeformte Flansche aufweisen und die sich überlappenden Flansche beider Blechteile im Überlappungsbereich zur Bildung eines tragenden Bauteils miteinander verschweißt werden. Erfindungsgemäß wird zur Herstellung eines solchen tragenden Bauteils einer Fahrzeugkarosserie wenigstens ein Flansch durch Ausstanzen (Lochen) eines Bereichs aus einer Fläche eines der Blechteile und anschließendes Abstellen des Flansches in eine zur Ebene der Fläche verschiedene Ebene gebildet.

Die in den Unteransprüchen genannten Merkmale betreffen bevorzugte Weiterbildungen der erfindungsgemäßen Anordnung bzw. des erfindungsgemäßen Verfahrens.

Nachfolgend wird die vorliegende Erfindung anhand von Ausführungsbeispielen unter Bezugnahme auf die beiliegenden Zeichnungen näher beschrieben. Dabei zeigen
- Fig. 1: einen schematisch vereinfachten Querschnitt durch einen aus zwei Blechteilen geformten Dachholm gemäß der Erfindung;
- Fig. 2: eine perspektivische Ansicht eines ersten Blechteils mit abgestellten Flanschen für eine erfindungsgemäße Anordnung;
- Fig. 3: eine schematisch vereinfachte Schnittansicht in dem Verfahrensschritt des Ausstanzens der für die Flansche vorgesehenen Bereiche.

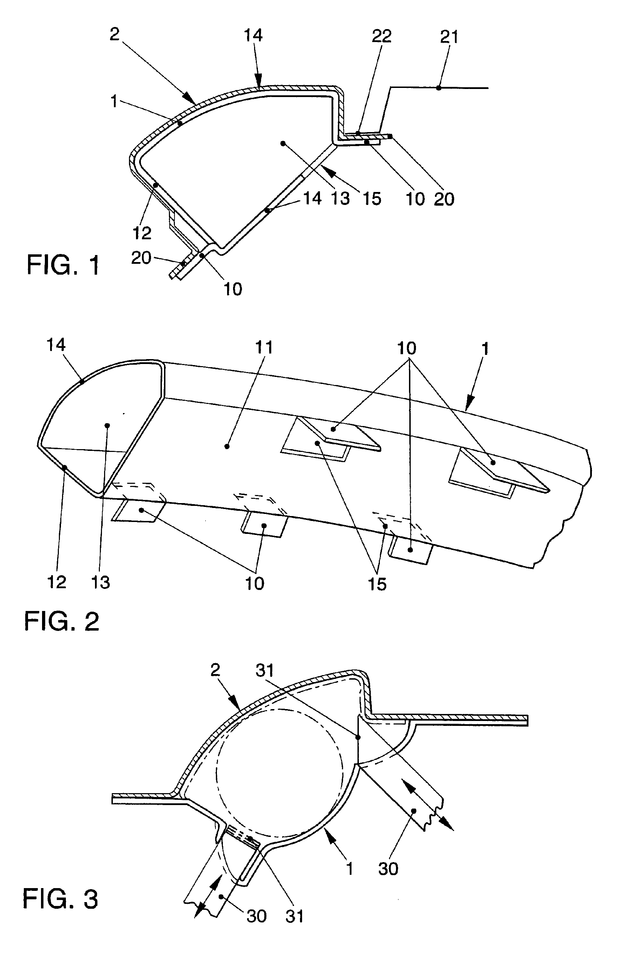

Zunächst wird auf Fig. 1 Bezug genommen. Die Darstellung der Anordnung eines tragenden Teils einer Fahrzeugkarosserie gemäß Fig. 1 ist stark schematisch vereinfacht. Bei dem tragenden Bauteil gemäß Fig. 1 handelt es sich um einen im Schnitt vereinfacht dargestellten Dachholm, welcher aus einem ersten Blechteil 1 und einem zweiten Blechteil 2 gebildet wird, welche durch Verschweißen, insbesondere durch Punktverschweißung miteinander verbindbar sind. Die beiden Ausgangsblechteile 1 und 2 können dabei durch Hydroforming geformt sein. Wie man in der Schnittdarstellung gemäß Fig. 1 erkennt, umschließen beide geformte Blechteile 1 und 2 in ihrem Inneren einen Hohlraum 13, wobei das erste Blechteil 1 innen liegt und das zweite Blechteil 2 außen liegt. Das erste Blechteil 1 hat abgestellte nach außen ragende Flansche 10 oben und unten. Diese Flansche 10 des ersten Blechteils 1 verlaufen parallel zu entsprechenden Flanschen 20 des zweiten Blechteils 2. Außerdem ist ein Dachblech 21 vorhanden, welches einen mit dem zweiten Blechteil 2 überlappenden Flanschbereich 22 aufweist, der über dem oberen Flansch 20 des zweiten Blechteils 2 liegt. Dadurch ist dieses Dachblech 21 durch Verschweißen mit dem Flansch 20 des zweiten Blechteils 2 verbindbar. Folglich wird eine Verbindung zwischen dem Dachblech 21 und der einen Dachholm bildenden Anordnung aus dem ersten Blechteil 1 und dem zweiten Blechteil 2 hergestellt. Von Bedeutung ist im Rahmen der vorliegenden Erfindung insbesondere die Art der Ausbildung der Flansche 10 des ersten Blechteils 1, die man besser aus der perspektivischen Darstellung gemäß Fig. 2 erkennen kann.

Fig. 2 zeigt schematisch vereinfacht in perspektivischer Darstellung das in Fig. 1 innenliegend dargestellte erste Blechteil 1. Man erkennt, daß das erste Blechteil 1 so geformt ist, daß es eine erste Fläche 11 aufweist, die in der Zeichnung nahezu senkrecht bzw. schräg von oben nach unten verläuft. Das erste Blechteil 1 weist weiterhin eine zweite untere Fläche 12 auf, die annähernd horizontal bzw. leicht geneigt verläuft. Diese zweite Fläche 12 ist mit der ersten Fläche 11 über eine gekrümmte Fläche 14 verbunden. Sowohl aus der ersten Fläche 11 als auch aus der zweiten Fläche 12 sind Bereiche durch Ausstanzen des Blechs gelocht, wobei in diesen Bereichen das Blech aufgebogen wurde, so daß sich jeweils von der Ebene der Fläche 11 bzw. 12 in einem Winkel abgestellte Flansche 10 ergeben. Die aus der Ebene der Fläche 11 abgestellen Flansche 10 verlaufen dabei in etwa horizontal und sind in etwa in einem spitzen Winkel oder in einem leicht stumpfen Winkel von der Ebene der Fläche 11 abgestellt. Aus der Ebene der Fläche 11 heraus wurden dabei diese Flansche 10 im Gegenuhrzeigersinn in der Zeichnung Fig. 2 betrachtet gebogen. Die Flansche 10, die aus der zweiten Fläche 12 ausgestanzt und durch Biegen abgestellt wurden, verlaufen etwa senkrecht nach unten bzw. leicht zur Senkrechten geneigt und nehmen wiederum einen in etwa rechten oder leicht spitzen Winkel zu der ursprünglichen Ebene der Fläche 12 ein. Dabei wurden diese Flansche der unteren Fläche 12 der Zeichnung in Fig. 2 ebenfalls im Gegenuhrzeigersinn von der Ebene der Fläche 12 abgestellt. Die aus beiden Flächen 11 bzw. 12 ausgestanzten Flansche 10 ragen von dem Hohlraum 13 aus betrachtet nach außen.

Wie man weiterhin aus Fig. 2 erkennt, sind sowohl von der Fläche 11 aus nach außen ragende Flansche 10 jeweils hintereinander mit Abstand angeordnet und verlaufen zueinander parallel und bei der unteren Fläche 12 sind ebenfalls mehrere nach außen und unten ragende Flansche 10 mit Abstand hintereinander angeordnet, die parallel zueinander verlaufen. Die jeweils hintereinanderliegenden Flansche 10 der einen bzw. der anderen Fläche 11 bzw. 12 liegen somit jeweils in der gleichen Ebene und ermöglichen eine Verbindung mit entsprechenden Flanschen 20 des zweiten Blechteils 2, die jedoch über die Länge dieses Blechteils 2 durchgehend angeordnet sein können. Diese Flansche 20 liegen dann auf den ausgestanzten und abgestellten Flanschen 10 des ersten Blechteils 1 auf und können mit diesen verschweißt werden. Die gelochten Bereiche, die in Fig. 2 mit 15 bezeichnet sind und aus denen die Flansche 10 ausgestanzt wurden, sind auch in Fig. 1 erkennbar.

Fig. 3 zeigt schematisch vereinfacht eine mögliche Art der Ausbildung der Flansche 10 durch Lochen der Flächen 11 und 12 mit Hilfe geeigneter Stanzwerkzeuge 30, die als Schieber ausgebildet sind und vorderseitig eine entsprechende Schneide 31 aufweisen. Diese Schieber 30 werden zum Ausstanzen vorgeschoben und anschließend wieder zurückgezogen. Das Abstellen der Flansche 10 nach außen hin kann danach gegebenenfalls gleichzeitig mit der Verformung des Blechteils 1 erfolgen.

## Patentansprüche

1. Anordnung eines tragenden Bauteils einer Fahrzeugkarosserie umfassend wenigstens ein erstes Blechteil und wenigstens ein mit diesem ersten Blechteil zu verbindendes zweites Blechteil, wobei beide Blechteile angeformte Flansche aufweisen und die sich überlappenden Flansche beider Blechteile im Überlappungsbereich zur Bildung eines tragenden Bauteils miteinander verschweißbar sind, **dadurch gekennzeichnet**, daß die Flansche (10) wenigstens eines der Blechteile (1) durch Ausstanzen (Lochen) von Bereichen wenigstens einer Fläche (11, 12) dieses Blechteils und Abstellen des Flansches (10) in eine von der Fläche (11, 12) verschiedene Ebene gebildet sind.

2. Anordnung eines tragenden Bauteils einer Fahrzeugkarosserie nach Anspruch 1, dadurch gekennzeichnet, daß die Flansche (10) etwa im rechten Winkel zur Fläche (11, 12) aus der sie ausgestanzt sind, abgestellt sind.

3. Anordnung eines tragenden Bauteils einer Fahrzeugkarosserie nach Anspruch 1 oder 2, dadurch gekennzeichnet, daß aus einer Fläche (11, 12) mehrere mit Abstand hintereinanderliegende parallele Flansche (10) abgestellt sind.

4. Anordnung eines tragenden Bauteils einer Fahrzeugkarosserie nach einem der Ansprüche 1 bis 3, dadurch gekennzeichnet, daß bei wenigstens einem Blechteil (1) Flansche (10) aus wenigstens einer ersten Fläche (11) sowie weitere Flansche (10) aus wenigstens einer zweiten Fläche (12) ausgestanzt und abgestellt sind.

5. Anordnung eines tragenden Bauteils einer Fahrzeugkarosserie nach einem der Ansprüche 1 bis 4, dadurch gekennzeichnet, daß wenigstens ein zweites Blechteil (2) über wenigstens eine Fläche durchgehende Flansche (20) aufweist, die mit den ausgestanzten und abgestellten Flanschen (10) des anderen Blechteils (1) durch Schweißen verbindbar sind.

6. Anordnung eines tragenden Bauteils einer Fahrzeugkarosserie nach einem der Ansprüche 1 bis 5, dadurch gekennzeichnet, daß das tragende Bauteil ein Dachholm ist.

7. Anordnung eines tragenden Bauteils einer Fahrzeugkarosserie nach einem der Ansprüche 1 bis 6, dadurch gekennzeichnet, daß die miteinander verbundenen Blechteile (1, 2) so geformt sind, daß sie in ihrem Inneren einen Hohlraum (13) bilden und Flansche (10) von den diesen Hohlraum (13) umschließenden Flächen (11, 12) nach außen ragend angeordnet sind.

8. Anordnung eines tragenden Bauteils einer Fahrzeugkarosserie nach einem der Ansprüche 1 bis 7, dadurch gekennzeichnet, daß wenigstens eines der miteinander zu verbindenden Blechteile (1, 2) ein Hydroformteil ist.

9. Verfahren zur Herstellung eines tragenden Bauteils einer Fahrzeugkarosserie, welches wenigstens ein erstes Blechteil umfaßt und wenigstens ein mit diesem ersten Blechteil zu verbindendes zweites Blechteil, wobei beide Blechteile angeformte Flansche aufweisen und die sich überlappenden Flansche beider Blechteile im Überlappungsbereich zur Bildung eines tragenden Bauteils miteinander verschweißt werden, dadurch gekennzeichnet, daß wenigstens ein Flansch (10) durch Ausstanzen (Lochen) eines Bereichs aus einer Fläche (11, 12) eines der Blechteile (1) und anschließendes Abstellen des Flansches (10) in eine zur Ebene der Fläche (11, 12) verschiedene Ebene gebildet wird.

10. Verfahren zur Herstellung eines tragenden Bauteils einer Fahrzeugkarosserie nach Anspruch 9, dadurch gekennzeichnet, daß das Ausstanzen der Flansche (10) aus den Flächen (11, 12) mittels eines Stanzwerkzeuges (30) erfolgt, welches als Schieber ausgebildet ist.
